# EUROPEAN PATENT APPLICATION

(11) **EP 4 708 415 A1**
(43) Date of publication of application: **11.03.2026**
(21) Application number: 24815540.0
(22) Date of filing: 29.05.2024
(51) Int. Cl.: H01M 8/1226, C25B 1/02, C25B 1/04, C25B 9/00, C25B 9/60, H01M 8/04, H01M 8/12, H01M 8/2475

(54) **ELECTROCONDUCTIVE MEMBER, ELECTROCHEMICAL CELL DEVICE, MODULE, AND MODULE ACCOMMODATION DEVICE**

(30) Priority: 31.05.2023 JP 2023090267
(71) Applicant: Kyocera Corporation, Kyoto-shi, Kyoto 612-8501 (JP)
(72) Inventor: SHIRAMOMO, Sasuke, Kyoto-shi, Kyoto 612-8501 (JP)
(74) Representative: Viering, Jentschura & Partner mbB Patent- und Rechtsanwälte
(86) International application number: PCT/JP2024/019788
(87) International publication number: WO 2024/248059

(57) **Abstract**

A conductive member includes a metal plate, a first porous layer, and a second porous layer. The metal plate includes a first surface and a second surface located on an opposite side to the first surface, and a gas can circulate between the first surface and the second surface. The first porous layer is located on the first surface. The second porous layer is located on the second surface. When a thermal expansion coefficient of the metal plate is α0, a thermal expansion coefficient of the first porous layer is α1, and a thermal expansion coefficient of the second porous layer is α2, there are relationships of α1 < α0 and α2 < α0, or α1 > α0 and α2 > α0.

## Description

### TECHNICAL FIELD

The present disclosure relates to a conductive member, an electrochemical cell device, a module, and a module housing device.

### BACKGROUND OF INVENTION

In recent years, various fuel cell stack devices each including a plurality of fuel cells have been proposed as next-generation energy. A fuel cell is a type of electrochemical cell that can obtain electrical power by using a fuel gas such as a hydrogen-containing gas and an oxygen-containing gas such as air.

### CITATION LIST

### PATENT LITERATURE

Patent Document 1: JP 2004-273213 A
Patent Document 2: JP 2019-179755 A
Patent Document 3: JP 2013-41717 A

### SUMMARY

In an aspect of an embodiment, a conductive member includes a metal plate, a first porous layer, and a second porous layer. The metal plate includes a first surface and a second surface located on an opposite side to the first surface, and a gas can circulate between the first surface and the second surface. The first porous layer is located on the first surface. The second porous layer is located on the second surface. When a thermal expansion coefficient of the metal plate is α0, a thermal expansion coefficient of the first porous layer is α1, and a thermal expansion coefficient of the second porous layer is α2, they have relationships of α1 < α0 and α2 < α0, or α1 > α0 and α2 > α0.

An electrochemical cell device of the present disclosure includes two or more electrochemical cells each including an element portion and the conductive member described above.

A module of the present disclosure includes the electrochemical cell device described above and a storage container that houses the electrochemical cell device.

A module housing device of the present disclosure includes the module described above, an auxiliary device for operating the module, and an exterior case for housing the module and the auxiliary device.

### BRIEF DESCRIPTION OF THE DRAWINGS

FIG. 1A is a cross-sectional view illustrating an example of an electrochemical cell device according to a first embodiment.
FIG. 1B is a plan view of an example of the electrochemical cell included in the electrochemical cell device according to the first embodiment when viewed from the side of an air electrode.
FIG. 1C is an enlarged cross-sectional view of a region R illustrated in FIG. 1A.

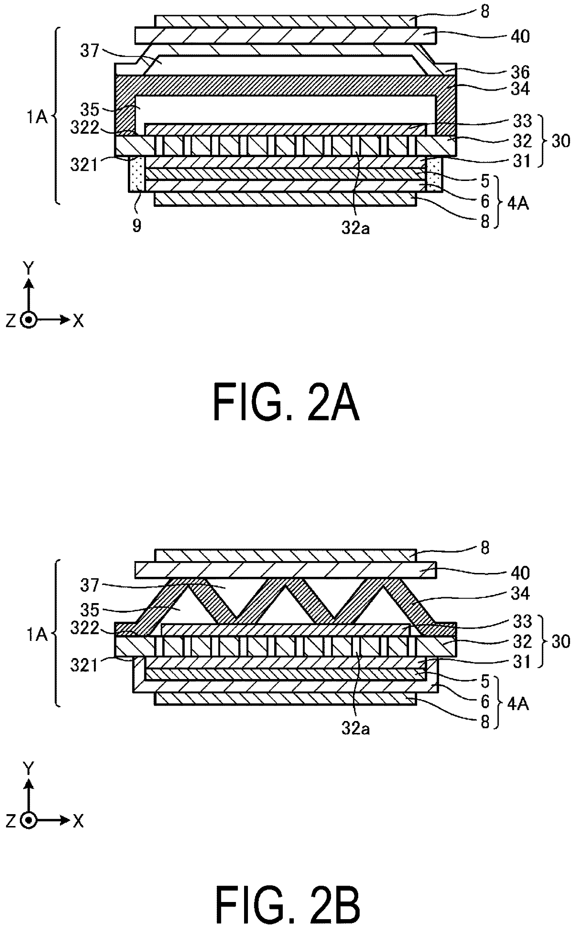

FIG. 2A is a cross-sectional view illustrating another example of the electrochemical cell device according to the first embodiment.
FIG. 2B is a cross-sectional view illustrating another example of the electrochemical cell device according to the first embodiment.
FIG. 3A is a perspective view illustrating an example of the electrochemical cell device according to the first embodiment.
FIG. 3B is a cross-sectional view taken along a line X-X illustrated in FIG. 3A.
FIG. 3C is a top view illustrating an example of the electrochemical cell device according to the first embodiment.
FIG. 4 is an exterior perspective view illustrating an example of a module according to the first embodiment.
FIG. 5 is an exploded perspective view schematically illustrating an example of a module housing device according to the first embodiment.
FIG. 6 is a perspective view illustrating an example of an electrochemical cell according to a second embodiment.
FIG. 7 is a partial cross-sectional view of the electrochemical cell illustrated in FIG. 6.

### DESCRIPTION OF EMBODIMENTS

The fuel cell stack device described above has room for improvement, for example, in terms of improving a performance such as a power generation capability, an electrolytic performance, and the like.

It is expected to provide a conductive member, an electrochemical cell device, a module, and a module housing device each having improved performance.

Embodiments of a conductive member, an electrochemical cell device, a module, and a module housing device disclosed in the present application are described below in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

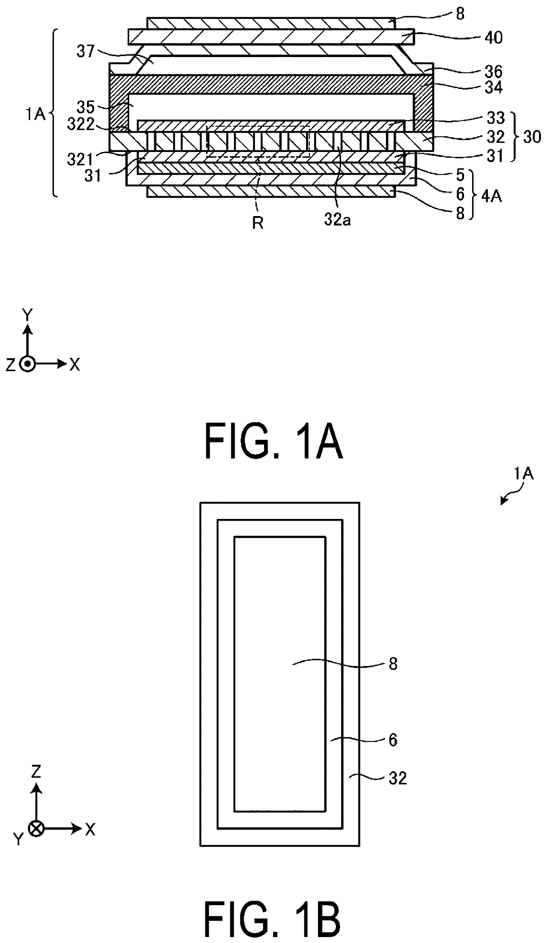

First, with reference to FIGs. 1A to 1C, an example of a solid oxide-type fuel cell will be described as an electrochemical cell according to a first embodiment. The electrochemical cell device may include a cell stack including a plurality of electrochemical cells. The electrochemical cell device including the plurality of electrochemical cells is simply referred to as a cell stack device.

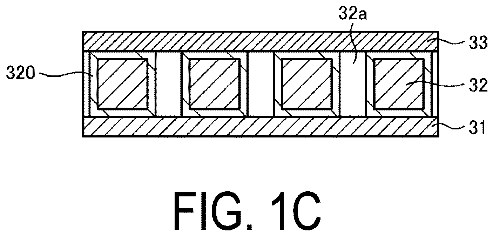

FIG. 1A is a cross-sectional view illustrating an example of an electrochemical cell device according to the first embodiment. FIG. 1B is a plan view of an example of the electrochemical cell included in the electrochemical cell device according to the first embodiment when viewed from the side of an air electrode. FIG. 1C is an enlarged cross-sectional view of a region R illustrated in FIG. 1A. Note that FIGs. 1A to 1C are enlarged views each illustrating part of a configuration of the electrochemical cell. Hereinafter, the electrochemical cell may be simply referred to as a cell.

Note that, for the sake of clarity, FIGs. 1A and 1B each illustrate a three-dimensional orthogonal coordinate system including a Z axis in which a vertically upward direction is a positive direction and a vertically downward direction is a negative direction. Such an orthogonal coordinate system may also be illustrated in other drawings used in the following description. The same and/or similar components as those of the electrochemical cell illustrated in FIGs. 1A to 1C are denoted by the same reference numerals and descriptions thereof will be omitted or simplified.

As illustrated in FIG, 1A, the electrochemical cell device according to the present embodiment includes a cell 1A. The cell 1A includes an element portion 4A, a conductive member 30, and a flow passage member 34. The element portion 4A includes a fuel electrode 5, a solid electrolyte layer 6, and an air electrode 8.

The fuel electrode 5 is a first electrode that comes into contact with a fuel gas which is a reducing gas. The fuel electrode 5 has gas permeability. An open porosity of the fuel electrode 5 may be, for example, within a range from 30% to 50%, particularly from 35% to 45%. The open porosity of the fuel electrode 5 may also be referred to as a porosity of the fuel electrode 5.

As the material of the fuel electrode 5, a commonly known material may be used. As the fuel electrode 5, any of porous electrically conductive ceramics, such as ceramics containing ZrO₂ in which a calcium oxide, a magnesium oxide, or a rare earth element oxide is solid-dissolved, and Ni and/or NiO may be used. This rare earth element oxide may contain a plurality of rare earth elements, for example, selected from the group consisting of Sc, Y, La, Nd, Sm, Gd, Dy, and Yb. Hereinafter, ZrO₂ in which a calcium oxide, a magnesium oxide, or a rare earth element oxide is solid-dissolved may be referred to as stabilized zirconia. Stabilized zirconia may include partially stabilized zirconia. The fuel electrode 5 may include CeO₂ in which La, Nd, or Yb is solid-dissolved.

The fuel electrode 5 may have a thermal expansion coefficient (linear expansion coefficient) of, for example, about 12 × 10⁻⁶/K.

The solid electrolyte layer 6 is an electrolyte and delivers ions between the fuel electrode 5 and the air electrode 8. At the same time, the solid electrolyte layer 6 has gas blocking properties, and makes a leakage of the fuel gas and the oxygen-containing gas less likely to occur.

The material of the solid electrolyte layer 6 may be, for example, ZrO₂ in which 3 mole% to 15 mole% of rare earth oxide is solid-dissolved. The rare earth element oxide may contain one or more rare earth elements, for example, selected from the group consisting of Sc, Y, La, Nd, Sm, Gd, Dy, and Yb. The solid electrolyte layer 6 may include, for example: ZrO₂ in which Yb, Sc or Gd is solid-dissolved; CeO₂ in which La, Nd or Yb is solid-dissolved; BaZrO₃ in which Sc or Yb is solid-dissolved; and BaCeO₃ in which Sc or Yb is solid-dissolved.

The solid electrolyte layer 6 may have a thermal expansion coefficient (linear expansion coefficient) of, for example, about 10 × 10⁻⁶/K.

The air electrode 8 is a second electrode that comes into contact with the oxygen-containing gas. The air electrode 8 has gas permeability. The open porosity of the air electrode 8 may be, for example, in the range from 20% to 50%, particularly, in the range from 30% to 50%. The open porosity of the air electrode 8 may also be referred to as the porosity of the air electrode 8.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

The air electrode 8 may have a thermal expansion coefficient (linear expansion coefficient) of, for example, about 15 × 10⁻⁶/K.

In addition, the element portion 4A may include an intermediate layer (not illustrated) located between the solid electrolyte layer 6 and the air electrode 8. When the element portion 4A includes the intermediate layer, the intermediate layer has a function of a diffusion prevention layer, for example. When strontium (Sr) contained in the air electrode 8 diffuses into the solid electrolyte layer 6, a resistance layer of SrZrO₃ is formed in the solid electrolyte layer 6. The intermediate layer causes Sr to less likely to diffuse, thereby reducing the formation of SrZrO₃.

A material of the intermediate layer is not particularly limited as long as the material is not likely to cause the diffusion of elements between the air electrode 8 and the solid electrolyte layer 6 in general. The material of the intermediate layer may include, for example, cerium oxide (CeO₂) in which rare earth elements except Ce (cerium) are solid-dissolved. As such rare earth elements, for example, gadolinium (Gd), samarium (Sm), or the like may be used.

The intermediate layer may have a thermal expansion coefficient (linear expansion coefficient) of, for example, about 12 × 10⁻⁶/K.

The cell 1A may further include a constraining layer. The constraining layer may be located between the element portion 4A and the conductive member 30. The constraining layer cooperates with the solid electrolyte layer 6 to make the element portion 4A less likely to generate a warp, a deflection, or the like.

A material of the constraining layer has a contraction factor similar to that of the material of the solid electrolyte layer 6 at the time of firing. The material of the constraining layer may be the same as the material of the solid electrolyte layer 6. The element portion 4A obtained by sandwiching the material of the electrode layer 5 described below of the element portion 4A between the material of the solid electrolyte layer 6 and the material of the constraining layer and then firing the materials has a reduced warp or deformation.

The constraining layer may or may not have gas permeability. When the constraining layer has gas blocking properties comparable to that of the solid electrolyte layer 6, the constraining layer can be partially disposed so as not to inhibit the inflow of the fuel gas to the fuel electrode 5.

The constraining layer may have a thermal expansion coefficient (linear expansion coefficient) of, for example, about 10 to 12 × 10⁻⁶/K.

The cell 1A may further include a gas diffusion layer. The gas diffusion layer may be located between the fuel electrode 5 and the conductive member 30. The gas diffusion layer has gas permeability and allows a fuel gas flowing through a flow passage 35 described below to permeate to the fuel electrode 5. An open porosity of the gas diffusion layer may be, for example, within a range from 30% to 50%, particularly from 35% to 45%.

A material of the gas diffusion layer may be porous electrically conductive ceramics, such as ceramics containing: stabilized zirconia or partially stabilized zirconia in which a calcium oxide, a magnesium oxide, or a rare earth element oxides is solid-dissolved; and Ni and/or NiO. This rare earth element oxide may contain a plurality of rare earth elements, for example, selected from the group consisting of Sc, Y, La, Nd, Sm, Gd, Dy, and Yb.

The gas diffusion layer may have a thermal expansion coefficient (linear expansion coefficient) of, for example, about 12 × 10⁻⁶/K.

The conductive member 30 includes an adhesive 31 as the first porous layer, a metal plate 32, and a deformation suppression layer 33 as the second porous layer.

The adhesive 31 is located between a first surface 321 of the metal plate 32 and the element portion 4A. The adhesive 31 bonds the element portion 4A and the metal plate 32 to each other, and fixes the element portion 4A to the metal plate 32.

The adhesive 31 may have electrical conductivity. The adhesive 31 may contain, for example, conductive particles such as Ni, and inorganic oxides such as TiO₂, rare earth element oxides (Y₂O₃, CeO₂, or the like), and transition metal oxides (Fe₂O₃, CuO, or the like).

The adhesive 31 may have gas permeability. When the adhesive 31 has gas permeability, the adhesive 31 may be located so as to cover an opening 32a described below. The solid electrolyte layer 6 may be located so as to cover a side surface of the adhesive 31.

As illustrated in FIG, 2A, a sealing material 9 different from the solid electrolyte layer 6 may be located on the side surfaces of the adhesive 31 and the fuel electrode 5. A material of the sealing material 9 may be dense glass or a ceramic. The material of the sealing material 9 may be, for example, amorphous glass or the like, or crystallized glass. As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, an SiO₂-MgO-based material may be used. The sealing material 9 may have electrical insulation.

The material of the adhesive 31 may have gas sealing properties. When the material of the adhesive 31 has the gas sealing properties, the adhesive 31 may be located so as to be in contact with the first surface 321 of the metal plate 32 where the opening 32a described below is not located. In this case, the adhesive 31 may be a dense body including a through hole at the position of the opening 32a.

The adhesive 31 may be made of a single layer using a single material or may be made of a laminate in which a plurality of materials are overlapped each other. The adhesive 31 may be integrated with the fuel electrode 5. In other words, the fuel electrode 5 may be the first porous layer also serving as the adhesive 31. The first porous layer may include the gas diffusion layer described above.

The metal plate 32 includes the first surface 321 and a second surface 322 each located at a respective one of both ends in the thickness direction (Y-axis direction).

The metal plate 32 has electrical conductivity. The metal plate 32 may also be, for example, a member made of metal containing chromium. The metal plate 32 may be, for example, stainless steel such as ferritic stainless steel or austenitic stainless steel having high heat resistance. The metal plate 32 may be made of, for example, nickel-chromium alloy or iron-chromium alloy. The metal plate 32 may contain, for example, metal oxide. The metal plate 32 may include a coating film 320 covering the surface as illustrated in FIG, 1C. The metal plate 32 need not include the coating film 320 on the surface.

In addition, the metal plate 32 includes the opening 32a. The opening 32a is a through hole penetrating between the first surface 321 and the second surface 322. A fuel gas flowing through the flow passage 35 descried below is supplied to the fuel electrode 5 of the element portion 4A through the opening 32a. A diameter of the opening 32a may be, for example, from 0.1 mm to 0.5 mm, particularly from 0.3 mm to 0.4 mm. An open area fraction in a region where the opening 32a is formed may be, for example, 10% or more. The metal plate 32 may include the coating film 320 covering a wall surface of the opening 32a. The metal plate 32 need not include the coating film 320 on the wall surface of the opening 32a.

The metal plate 32 may have a thermal expansion coefficient (linear expansion coefficient) of, for example, about 13 × 10⁻⁶/K.

The metal plate 32 may have gas permeability, for example. In such a case, the metal plate 32 need not include the opening 32a.

The deformation suppression layer 33 is located so as to be in contact with the second surface 322 of the metal plate 32. The deformation suppression layer 33 is located between the metal plate 32 and the flow passage member 34. The deformation suppression layer 33 cooperates with the adhesive 31 to make the metal plate 32 less likely to generate a warp, a deflection, or the like.

The deformation suppression layer 33 may have electrical conductivity. The electrical conductivity of the deformation suppression layer 33 may be, for example, from 10 S/m to 1000 S/m.

The material of the deformation suppression layer 33 may be, for example, ZrO₂ in which Y is solid-dissolved. The deformation suppression layer 33 may include, for example, TiO₂ in which Sr or Ni is solid-dissolved. The material of the deformation suppression layer 33 may be the same as the material of the adhesive 31.

The deformation suppression layer 33 may have gas permeability. When the deformation suppression layer 33 has gas permeability, the deformation suppression layer 33 may be located so as to cover the opening 32a.

The material of the deformation suppression layer 33 may have gas sealing properties. When the material of the deformation suppression layer 33 has the gas sealing properties, the deformation suppression layer 33 may be located so as to be in contact with the second surface 322 of the metal plate 32 where the opening 32a is not located. In this case, the deformation suppression layer 33 may be a dense body including a through hole at the position of the opening 32a.

The deformation suppression layer 33 may be made of a single layer using a single material or may be made of a laminate in which a plurality of materials are overlapped each other.

The deformation suppression layer 33 has, for example, a thermal expansion coefficient (linear expansion coefficient) closer to that of the adhesive 31 than to that of the metal plate 32. In the conductive member 30, when the metal plate 32 is sandwiched between the adhesive 31 and the deformation suppression layer 33 having similar thermal expansion coefficients (linear expansion coefficients), the metal plate 32 is less likely to generate a warp, a deflection, or the like.

Here, when the thermal expansion coefficient of the metal plate 32 is α0, the thermal expansion coefficient of the adhesive 31, which is the first porous layer, is α1, and the thermal expansion coefficient of the deformation suppression layer 33, which is the second porous layer, is α2, the conductive member 30 may have relationships of α1 < α0 and α2 < α0, for example. Accordingly, the metal plate 32 is less likely to generate the warp, the deflection, or the like, and thus the adhesion between the metal plate 32 and the element portion 4A increases. Thus, with a cell stack device 10 including the conductive member 30, power generation capability can be improved. In this case, α1 and α2 may be, for example, about 10 to 12 × 10⁻⁶/K.

The conductive member 30 may include the metal plate 32, the adhesive 31, and the deformation suppression layer 33 each having the relationships of α1 > α0 and α2 > α0. Even in this case, the metal plate 32 is less likely to generate the warp, the deflection, or the like, and thus the adhesion between the metal plate 32 and the element portion 4A increases. Thus, with the cell stack device 10 including the conductive member 30, the power generation capability can be improved. The values of α0, α1, and α2 can be adjusted by, for example, changing the composition of the conductive member 30.

Further, |α1 - α2| may be smaller than both |α0 - α1| and |α0 - α2|. Accordingly, the metal plate 32 is further less likely to generate the warp, the deflection, or the like, and thus with the cell stack device 10 including the conductive member 30, the power generation capability can be further improved. The material of the deformation suppression layer 33, which is the second porous layer, may be the same as or different from the material of the adhesive 31, which is the first porous layer, as long as a magnitude correlation of α1, α2, and α3 is satisfied.

The thermal expansion coefficient of each member included in the conductive member 30 can be obtained, for example, based on the results of analyzing the composition of the conductive member 30, preparing a test piece based on the analyzed composition, and measuring the test piece by a thermomechanical analysis method (TMA method) in accordance with JIS R 1618:1994.

The flow passage member 34 is located on the second surface 322 side of the metal plate 32. In the flow passage member 34, for example, a contact portion with the second surface 322 is fixed and electrically bonded to the second surface 322 by welding or the like. The flow passage member 34 may also be fixed and electrically bonded to the metal plate 32 with a sealing material, a brazing material, or the like having electrical conductivity. A space located between the deformation suppression layer 33 and the flow passage member 34 is the flow passage 35 through which the fuel gas circulates. The fuel gas flowing through the flow passage 35 permeates the conductive member 30 and is supplied to the fuel electrode 5. The flow passage member 34 may include one or more protruding portions protruding toward the deformation suppression layer 33.

The flow passage member 34 is further fixed and electrically bonded to a current collection member 36 by welding or the like. The current collection member 36 may also be fixed and electrically bonded to the flow passage member 34 with a sealing material, a brazing material, or the like, having electrical conductivity. The current collection member 36 is fixed and electrically bonded to the air electrode 8 of the cells 1A adjacent to each other via the adhesive 40. A space located between the current collection member 36 and the flow passage member 34 is a flow passage 37 through which an oxygen-containing gas circulates. The oxygen-containing gas flowing through the flow passage 37 permeates the adhesive 40 from a slit of the current collection member 36 and is supplied to the air electrode 8 included in the adjacent cell 1A.

The materials of the flow passage member 34 and the current collection member 36 are a dense metal or an alloy. The flow passage member 34 makes it less likely to generate a leak of the fuel gas flowing through the flow passage 35 and the oxygen-containing gas flowing through the flow passage 37. The flow passage member 34 and the current collection member 36 may include a coating layer. For example, a surface of the flow passage member 34 facing the flow passage 35 may include a coating layer having reduction resistance. A surface of the flow passage member 34 facing the flow passage 37 may include a coating layer having oxidation resistance. These coating layers may have electrical conductivity.

The shapes of the flow passage member 34 and the current collection member 36 are not limited to the shapes illustrated in FIG. 1A. The flow passage member 34 and the current collection member 36 may have any shape as long as they electrically connect the adjacent ones of the cell 1A to each other and make it less likely to generate the leak of the fuel gas and oxygen-containing gas. For example, as illustrated in FIG, 2B, the flow passage member 34 may be integrated with the current collection member 36 and may include a first protruding portion protruding toward the deformation suppression layer 33 and a second protruding portion protruding toward the opposite side to the first protruding portion.

### Configuration of Cell Stack Device

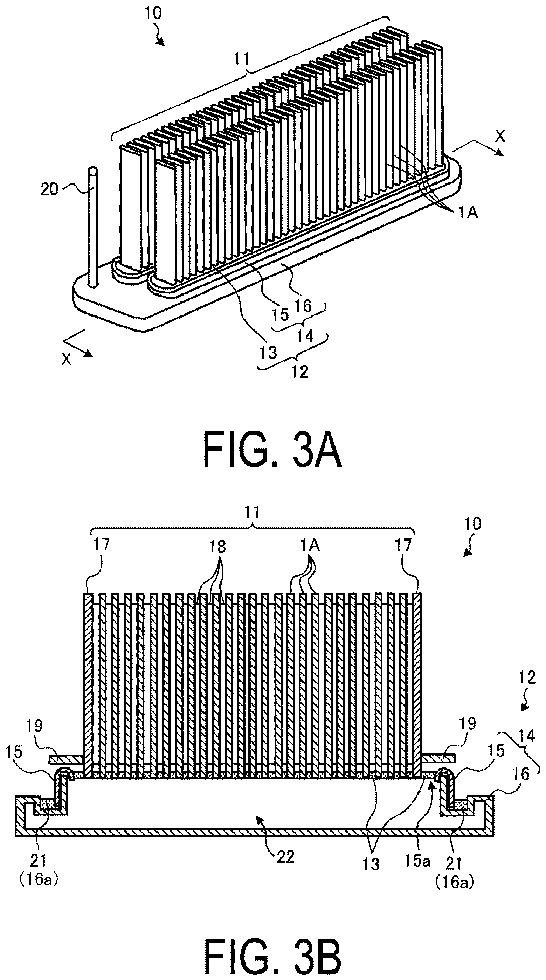

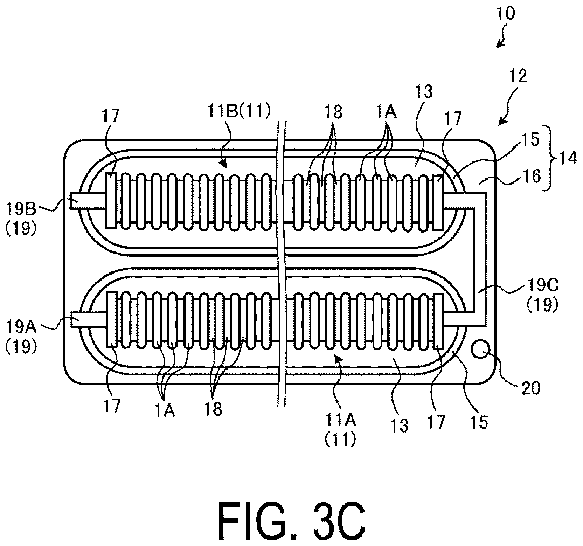

An electrochemical cell device according to the present embodiment using the cell 1A described above will be described with reference to FIGs. 3A to 3C. FIG. 3A is a perspective view illustrating an example of an electrochemical cell device according to the first embodiment. FIG. 3B is a cross-sectional view taken along a line X-X illustrated in FIG. 3A. FIG. 3C is a top view illustrating an example of the electrochemical cell device according to the first embodiment.

As illustrated in FIG. 3A, the cell stack device 10 includes a cell stack 11 including a plurality of the cells 1A arranged (stacked) in the thickness direction (Y axis direction illustrated in FIG, 1A) of the element portion 4A, and a fixing member 12.

The fixing member 12 includes a fixing material 13 and a support member 14. The support member 14 supports the cells 1A. The fixing material 13 fixes the cells 1A to the support member 14. The support member 14 includes a support body 15 and a gas tank 16. The support body 15 and the gas tank 16, which are the support member 14, are made of metal and have electrical conductivity.

As illustrated in FIG. 3B, the support body 15 includes an insertion hole 15a, into which the lower end portions of the plurality of cells 1A are inserted. The lower end portions of the plurality of cells 1A and the inner wall of the insertion hole 15a are bonded with the fixing material 13.

The gas tank 16 includes an opening portion through which a reactive gas is supplied to the plurality of cells 1A via the insertion hole 15a, and a recessed groove 16a located on the periphery of the opening portion. The outer peripheral end portion of the support body 15 is bonded to the gas tank 16 by a bonding material 21 with which the recessed groove 16a of the gas tank 16 is filled.

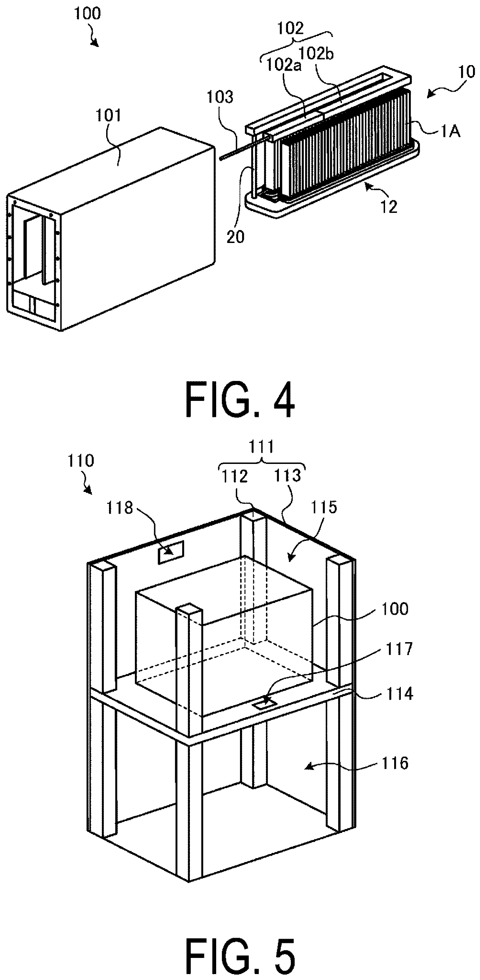

In the example illustrated in FIG. 3A, the fuel gas is stored in an internal space 22 (see FIG. 3B) formed by the support body 15 and the gas tank 16, which constitute the support member 14. The gas tank 16 includes a gas circulation pipe 20 connected thereto. The fuel gas is supplied to the gas tank 16 through the gas circulation pipe 20 and is supplied from the gas tank 16 to the flow passage 35 (see FIG. 1A) inside the cells 1A. The fuel gas to be supplied to the gas tank 16 is produced in a reformer 102 (see FIG. 4) which will be described below.

A hydrogen-rich fuel gas can be produced, for example, by steam-reforming a raw fuel. When the fuel gas is produced by steam-reforming, the fuel gas contains steam.

The example illustrated in FIG. 3A includes two rows of cell stacks 11, two support bodies 15, and the gas tank 16. Each of the two rows of cell stacks 11 includes a plurality of cells 1A. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is constituted by a single gas tank 16 and two support bodies 15.

The insertion hole 15a has, for example, an oval shape in a top surface view. In the insertion hole 15a, for example, the length in the arrangement direction, that is, a thickness direction (Y axis direction illustrated in FIG, 1A) of the cell 1A is larger than the distance between two end current collection members 17 located at both ends of the cell stack 11. The width of the insertion hole 15a is, for example, greater than the length of the cell 1A in the width direction (X axis direction illustrated in FIG, 1A).

As illustrated in FIG. 3B, a bonding portion between the inner wall of the insertion hole 15a and the lower end portion of each of the cells 1A is filled with the fixing material 13 and solidified. Accordingly, the inner wall of the insertion hole 15a and the lower end portions of the plurality of cells 1A are bonded and fixed, and the lower end portions of the cells 1A are bonded and fixed to each other. Gas-flow passages 2a of each of the cells 1A communicate, at the lower end portion, with the internal space 22 of the support member 14.

The fixing material 13 and the bonding material 21 may be one having low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, an SiO₂-MgO-based material may be used.

As illustrated in FIG. 3B, a conductive member 18 is interposed between cells 1A adjacent to each other among the plurality of cells 1A. The conductive member 18 electrically connects one adjacent cell 1A and the other adjacent cell 1A in series. More specifically, the conductive member 18 connects the fuel electrode 5 of one of the cells 1A with the air electrode 8 of the other of the cells 1A. The conductive member 18 may be the conductive member 30 illustrated in FIG. 1A, or may be a member different from the conductive member 30.

As illustrated in FIG. 3B, the end current collection members 17 are electrically connected to the cells 1A located at the outermost sides in the arrangement direction of the plurality of cells 1A. The end current collection members 17 are each connected to an electrically conductive portion 19 protruding outward from the cell stack 11. The electrically conductive portion 19 collects electricity generated by the cells 1A and conducts the electricity to the outside. Note that in FIG. 3A, the end current collection members 17 are not illustrated.

As illustrated in FIG. 3C, the cell stack device 10 may be a single battery in which two cell stacks 11A and 11B are connected in series. In such a case, the electrically conductive portion 19 of the cell stack device 10 may include a positive terminal 19A, a negative terminal 19B, and a connecting terminal 19C.

The positive electrode terminal 19A functions as a positive electrode when the electrical power generated by the cell stack 11 is output to the outside. The positive electrode terminal 19A is electrically connected to the end current collection member 17 on a positive electrode side in the cell stack 11A. The negative electrode terminal 19B functions as a negative electrode when the electrical power generated by the cell stack 11 is output to the outside. The negative electrode terminal 19B is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

Although not illustrated in FIGs. 3A to 3C, the cell stack device 10 may include a second gas tank in an upper portion of the cell stack 11, the second gas tank fixing upper end portions of the plurality of cells 1A, and recovering gas discharged from the flow passage 35 inside the cells 1A.

### Module

Next, a module according to the embodiment of the present disclosure using the cell stack device 10 described above will be described with reference to FIG. 4. FIG. 4 is an exterior perspective view illustrating an example of the module according to the first embodiment. FIG. 4 illustrates a state in which the front and rear surfaces, which constitute part of a storage container 101, are removed, and the cell stack device 10 of the fuel cell stored inside is taken out rearward.

As illustrated in FIG. 4, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene and supplies the fuel gas to the cell 1A. The raw fuel is supplied to the reformer 102 through a raw fuel supply pipe 103. Note that the reformer 102 may include a vaporizing unit 102a for vaporizing water and a reformer 102b. The reformer 102b includes a reforming catalyst (not illustrated) to reform the raw fuel into a fuel gas. The reformer 102 can perform steam-reforming, which is a highly efficient reformation reaction.

The fuel gas generated by the reformer 102 is supplied to the flow passage 35 of the cell 1A (see FIG. 1A) through the gas circulation pipe 20, the gas tank 16, and the support member 14.

When the cell stack device 10 includes the second gas tank in the upper portion of the cell stack 11, the reformer 102 may be disposed at a position other than above the cell stack device 10. The raw fuel supply pipe 103, the gas circulation pipe 20, and the like may be appropriately disposed according to the arrangement of the cell stack device 10 and the reformer 102.

In the module 100 having the configuration mentioned above, the temperature in the module 100 during normal power generation is about from 500°C to 1000°C due to power generation by the cell 1A, and the like.

In such a module 100, as described above, the module 100 with improved power generation capability can be provided by housing the cell stack device 10 with the improved power generation capability.

### Module Housing Device

FIG. 5 is an exploded perspective view schematically illustrating an example of the module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that part of the configuration is not illustrated in FIG. 5.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that, in FIG. 5, the auxiliary device housed in the auxiliary device housing chamber 116 is not illustrated.

The dividing plate 114 includes an air circulation hole 117 for causing air in the auxiliary device housing chamber 116 to flow to the module housing chamber 115 side. The external plate 113 constituting the module housing chamber 115 has an exhaust hole 118 for discharging air inside the module housing chamber 115.

In such a module housing device 110, as described above, the module housing device 110 with improved power generation capability can be provided by having the module 100 with improved power generation capability in the module housing chamber 115.

### Second Embodiment

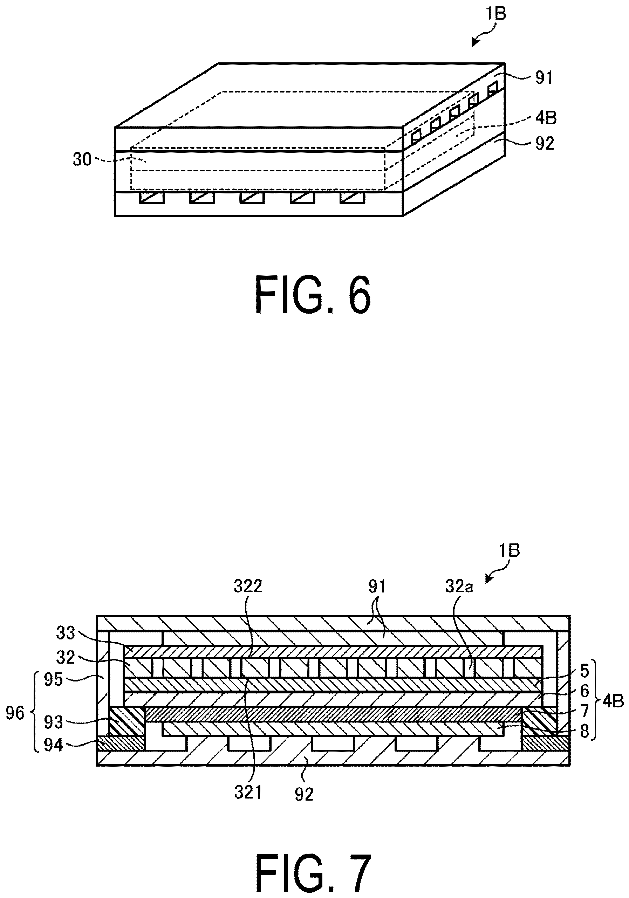

FIG. 6 is a perspective view illustrating an example of the electrochemical cell according to a second embodiment. FIG. 7 is a partial cross-sectional view of the electrochemical cell illustrated in FIG. 6.

As illustrated in FIGs. 6 and 7, the cell 1B includes an element portion 4B, a conductive member 30, and flow passage members 91 and 92. The element portion 4B includes a fuel electrode 5, a solid electrolyte layer 6, and an air electrode 8. Materials of the fuel electrode 5, the solid electrolyte layer 6, and the air electrode 8 may be the same as the materials of the fuel electrode 5, the solid electrolyte layer 6, and the air electrode 8 included in the cell 1A described above. The element portion 4B may include an intermediate layer 7 located between the solid electrolyte layer 6 and the air electrode 8. The material of the intermediate layer 7 may be the same as the material of the intermediate layer optionally included in the cell 1A described above.

The flow passage members 91 and 92 include the gas-flow passages for supplying a gas to the fuel electrode 5 or the air electrode 8, and electrically connect the adjacent ones of the cells 1B to each other. In an electrochemical cell device in which a plurality of flat plate cells are layered, for example, a plurality of cells 1B are electrically connected by the flow passage members 91 and 92 that are metal layers adjacent to each other.

As illustrated in FIG. 7, the cell 1B includes a sealing material for hermetically sealing the flow passage of a fuel gas and the flow passage of an oxygen-containing gas in the flat plate cell stack. The sealing material is a fixing member 96 of the cell, and includes a bonding material 93 and support members 94 and 95 constituting a frame. The bonding material 93 may be a glass or may be a metal material such as silver solder.

The support member 94 may be a so-called separator that separates the flow passage of the fuel gas and the flow passage of the oxygen-containing gas. The material of the support members 94 and 95 may be, for example, an electrically conductive metal, or may be an insulating ceramic. One or both of the support members 94 and 95 may be an insulating material. When the support member 94 is a metal, the support member 94 may be integrated with the flow passage member 92. When the support member 95 is a metal, the support member 95 may be integrated with the flow passage member 91.

One of the support members 94 and 95 has insulation properties and electrically insulates the two flow passage members 91 and 92, which sandwich the flat-plate cell, from each other.

In the cell 1B illustrated in FIG. 7, the conductive member 30 is located between the element portion 4B and the flow passage member 91. The conductive member 30 includes a first porous layer, and a deformation suppression layer 33 as a second porous layer. In the cell 1B illustrated in FIG. 7, the first porous layer of the conductive member 30 is the fuel electrode 5 in contact with the first surface 321 of the metal plate 32. The conductive member 30 of the cell 1B may include an adhesive as the first porous layer between the conductive member 30 and the fuel electrode 5. The adhesive bonds the element portion 4B and the metal plate 32 to each other, and fixes the element portion 4B to the metal plate 32. The first porous layer may include the gas diffusion layer described above.

The metal plate 32 may be made of the same material as the metal plate 32 included in the electrochemical cell according to the first embodiment. The metal plate 32 may be, for example, a member made of metal having electrical conductivity, and may contain chromium. The metal plate 32 may contain, for example, metal oxide. The metal plate 32 may or may not include a coating film covering the surface.

In addition, the metal plate 32 includes the opening 32a. The opening 32a is a through hole penetrating between the first surface 321 and the second surface 322. The metal plate 32 may or may not include a coating film covering the wall surface of the opening 32a.

The metal plate 32 may have a thermal expansion coefficient (linear expansion coefficient) of, for example, about 13 × 10⁻⁶/K.

The metal plate 32 may have gas permeability, for example. In such a case, the metal plate 32 need not include the opening 32a.

The deformation suppression layer 33 is located so as to be in contact with the second surface 322 of the metal plate 32. The deformation suppression layer 33 is located between the metal plate 32 and the flow passage member 91. In the cell 1B illustrated in FIG. 7, the deformation suppression layer 33 cooperates with the fuel electrode 5, which is the first porous layer, to make the metal plate 32 less likely to generate a warp, a deflection, or the like.

In the cell 1B, the deformation suppression layer 33 of the conductive member 30 has electrical conductivity. The deformation suppression layer 33 electrically connects the flow passage member 91 and the element portion 4B to each other. The material of the deformation suppression layer 33 may be the same as the material of the fuel electrode 5.

The deformation suppression layer 33 may have gas permeability. When the deformation suppression layer 33 has gas permeability, the deformation suppression layer 33 may be located so as to cover the opening 32a. The material of the deformation suppression layer 33 may have gas sealing properties. When the material of the deformation suppression layer 33 has the gas sealing properties, the deformation suppression layer 33 may be located so as to be in contact with the second surface 322 of the metal plate 32 where the opening 32a is not located. In this case, the deformation suppression layer 33 may be a dense body including a through hole at the position of the opening 32a.

The deformation suppression layer 33 may be made of a single layer using a single material or may be made of a laminate in which a plurality of materials are overlapped each other.

The deformation suppression layer 33 has, for example, a thermal expansion coefficient (linear expansion coefficient) closer to that of the adhesive 31 than to that of the metal plate 32. In the conductive member 30, when the metal plate 32 is sandwiched between the adhesive 31 and the deformation suppression layer 33 having similar thermal expansion coefficients (linear expansion coefficients), the metal plate 32 is less likely to generate a warp, a deflection, or the like.

When the thermal expansion coefficient of the metal plate 32 is α0, the thermal expansion coefficient of the fuel electrode 5, which is the first porous layer, is α1, and the thermal expansion coefficient of the deformation suppression layer 33, which is the second porous layer, is α2, the conductive member 30 may have relationships of α1 < α0 and α2 < α0, for example. Accordingly, the metal plate 32 is less likely to generate the warp, the deflection, or the like, and thus the adhesion between the metal plate 32 and the element portion 4B increases. Thus, with the cell stack device including the conductive member 30, the power generation capability can be improved. In this case, α1 and α2 may be, for example, about 10 to 12 × 10 ⁻⁶/K.

The conductive member 30 may include the metal plate 32, the fuel electrode 5, and the deformation suppression layer 33 having the relationships of α1 > α0 and α2 > α0. Even in this case, the metal plate 32 is less likely to generate the warp, the deflection, or the like, and thus the adhesion between the metal plate 32 and the element portion 4B increases, and with the cell stack device including the conductive member 30, the power generation capability can be improved. The values of α0, α1, and α2 can be adjusted by, for example, changing the composition of the conductive member 30.

Further, |α1 - α2| may be smaller than both |α0 - α1| and |α0 - α2|. Accordingly, the metal plate 32 is further less likely to generate the warp, the deflection, or the like, and thus with the cell stack device including the conductive member 30, the power generation capability can be further improved. The material of the deformation suppression layer 33, which is the second porous layer, may be the same as or different from the material of the fuel electrode 5, which is the first porous layer, as long as a magnitude correlation of α1, α2, and α3 is satisfied.

### Other Embodiments

In the above-described embodiments, a fuel cell, a fuel cell stack device, a fuel cell module, and a fuel cell device are illustrated as examples of "electrochemical cell", "electrochemical cell device", "module", and "module housing device", respectively. However, other examples may include an electrolytic cell, an electrolytic cell stack device, an electrolytic module, and an electrolytic device, respectively. The electrolytic cell includes a first electrode and a second electrode and, when being supplied with electrical power, decomposes water vapor into hydrogen and oxygen or decomposes carbon dioxide into carbon monoxide and oxygen. Although an oxide ion conductor or a hydrogen ion conductor is illustrated as an example of the electrolyte material of the electrochemical cell in each of the above embodiments, the electrolyte material may be a hydroxide ion conductor. Such an electrolytic cell, an electrolytic cell stack device, an electrolytic module, and an electrolytic device can have an improved electrolytic performance.

While the present disclosure has been described in detail, the present disclosure is not limited to the aforementioned embodiments, and various changes, improvements, and the like can be made without departing from the gist of the present disclosure.

In one embodiment,
(1) a conductive member includes
   a metal plate including a first surface, and a second surface located on an opposite side of the first surface, the metal plate allowing a gas to circulate between the first surface and the second surface,
   a first porous layer in contact with the first surface, and
   a second porous layer in contact with the second surface, in which
   when a thermal expansion coefficient of the metal plate is α0, a thermal expansion coefficient of the first porous layer is α1, and a thermal expansion coefficient of the second porous layer is α2, there are relationships of α1 < α0 and α2 < α0, or α1 > α0 and α2 > α0.
(2) In the conductive member according to the above-described (1), the metal plate may include a plurality of openings penetrating the first surface and the second surface.
(3) In the conductive member according to the above-described (1) or (2), the first porous layer and the second porous layer may have electrical conductivity.
(4) In the conductive member according to any one of the above-described (1) to (3),the first porous layer, the second porous layer, and the metal plate may have relationships of α1 < α0 and α2 < α0.
(5) In the conductive member according to any one of the above-described (1) to (4), |α1 - α2| may be smaller than both |α0 - α1| and |α0 - α2|.

In one embodiment,
(6) an electrochemical cell device includes two or more electrochemical cells including an element portion; and
the conductive member according to any one of the above-described (1) to (5).

In one embodiment, (7) a module includes the electrochemical cell device as recited in (6) and a storage container housing the electrochemical cell device.

In one embodiment, (8) a module housing device includes the module as recited in (7), an auxiliary device configured to operate the module, and an external case housing the module and the auxiliary device.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1A, 1B Cell
4A, 4B Element portion
9 Sealing material
10 Cell stack device
30 Conductive member
31 Adhesive
32 Metal plate
33 Deformation suppression layer
100 Module
110 Module housing device

## Claims

1. A conductive member comprising:
a metal plate comprising
a first surface, and
a second surface located on an opposite side of the first surface;
the metal plate allowing a gas to circulate between the first surface and the second surface;
a first porous layer in contact with the first surface; and
a second porous layer in contact with the second surface, wherein
when a thermal expansion coefficient of the metal plate is α0, a thermal expansion coefficient of the first porous layer is α1, and a thermal expansion coefficient of the second porous layer is α2, there are relationships of α1 < α0 and α2 < α0, or
α1 > α0 and α2 > α0.

2. The conductive member according to claim 1, wherein the metal plate comprises a plurality of openings penetrating the first surface and the second surface.

3. The conductive member according to claim 1 or 2, wherein the first porous layer and the second porous layer have electrical conductivity.

4. The conductive member according to any one of claims 1 to 3, wherein the first porous layer, the second porous layer, and the metal plate have relationships of α1 < α0 and α2 < α0.

5. The conductive member according to any one of claims 1 to 4, wherein |α1 - α2| is smaller than both |α0 - α1| and |α0 - α2|.

6. An electrochemical cell device comprising:
two or more electrochemical cells comprising an element portion; and
the conductive member according to any one of claims 1 to 5.

7. A module comprising:
the electrochemical cell device according to claim 6; and
a storage container housing the electrochemical cell device.

8. A module housing device comprising:
the module according to claim 7;
an auxiliary device configured to operate the module; and
an external case housing the module and the auxiliary device.
